# EUROPEAN PATENT APPLICATION

(11) **EP 4 365 756 A1**
(43) Date of publication of application: **08.05.2024**
(21) Application number: 23204835.5
(22) Date of filing: 20.10.2023
(51) Int. Cl.: G06F 16/95, H04N 1/00, G06F 9/54, G06F 3/00, H04L 67/06

(54) **IMAGE GENERATION SYSTEM, COMMUNICATION APPARATUS, CONTROL METHOD, AND NON-TRANSITORY COMPUTER-READABLE STORAGE MEDIUM**

(30) Priority: 07.11.2022 JP 2022178193
(71) Applicant: CANON KABUSHIKI KAISHA, Tokyo 146-8501 (JP)
(72) Inventor: IKEDA, Atsushi, Tokyo, 146-8501 (JP)
(74) Representative: TBK

(57) **Abstract**

An image generation system (203) capable of communicating with a communication apparatus (101), the system includes reception means that receives an operation instruction for a Web page from the communication apparatus, acquisition means that, if the operation instruction is a copy instruction, acquires Web page configuration information which exists at coordinates on the Web page and for which the copy instruction has been accepted, and transmission means that transmits, to the communication apparatus, one of the Web page configuration information and information based on the Web page configuration information.

## Description

### BACKGROUND OF THE INVENTION

### Field of the Invention

The present disclosure relates to an image generation system, a communication apparatus, a control method, and a non-transitory computer-readable storage medium.

### Description of the Related Art

Japanese Patent Laid-Open No. 2021-043479 discloses that an element designated by a user on a Web page with a right click is analyzed to acquire the extractable identifier, a list of acquired identifiers is overlapped and displayed on the Web page, and data of the element corresponding to the identifier selected from the list by the user with a left click is stored in a clipboard.

Here, consider a case in which, like a cloud browser that generates the drawing result of a Web page on a cloud server, an apparatus functioning as the cloud browser exists between a communication apparatus and a Web service.

If a copy function (storing in a clipboard) is executed on the apparatus functioning as the cloud browser, data of the character string and image on the Web page are stored in the shared memory (clipboard) of the apparatus. That is, the copied data does not exist in the shared memory (clipboard) of the communication apparatus. Therefore, a problem exists that another application and the like of the communication apparatus cannot use the copied data.

### SUMMARY OF THE INVENTION

The present disclosure has been made in consideration of the above-described problem, and provides a technique for enabling a communication apparatus to use data on a Web page copied by an apparatus functioning as a cloud browser.

The present invention in its first aspect provides an image generation system as specified in claims 1 to 8.

The present invention in its second aspect provides a communication apparatus as specified in claim 9.

The present invention in its third aspect provides a control method of an image generation system as specified in claim 10.

The present invention in its fourth aspect provides a control method of a communication apparatus as specified in claim 11.

The present invention in its fifth aspect provides a non-transitory computer-readable storage medium as specified in claims 12 and 13.

Further features of the present disclosure will become apparent from the following description of exemplary embodiments (with reference to the attached drawings).

### BRIEF DESCRIPTION OF THE DRAWINGS

Fig. 1 is a view showing an example of the hardware arrangement of a virtual machine according to an embodiment;
Fig. 2 is a view showing an example of the arrangements of an image generation system and a communication apparatus according to the embodiment;
Fig. 3 is a flowchart illustrating the procedure of a process executed by the image generation system according to the embodiment;
Fig. 4 is a flowchart illustrating the procedure of a process executed by the communication apparatus according to the embodiment;
Fig. 5 is a view showing an example of implementing, by a program, the process on the side of the communication apparatus according to the embodiment;
Figs. 6A to 6C are views showing an example of implementing, by a program, the process on the side of the image generation system according to the embodiment;
Figs. 7Ato 7C are views showing an outline of an operation of copying an image on a Web page into a shared memory according to the embodiment; and
Figs. 8A to 8C are views showing an outline of an operation of copying a character string on the Web page into the shared memory according to the embodiment.

### DESCRIPTION OF THE EMBODIMENTS

Hereinafter, embodiments will be described in detail with reference to the attached drawings. Note, the following embodiments are not intended to limit the scope of the disclosure. Multiple features are described in the embodiments, but limitation is not made to an embodiment that requires all such features, and multiple such features may be combined as appropriate. Furthermore, in the attached drawings, the same reference numerals are given to the same or similar configurations, and redundant description thereof is omitted.

### (Embodiment)

In this embodiment, an example will be described in which Web page configuration information is acquired on the side of an image generation system functioning as a cloud browser, and the acquired information is made available on the side of a communication apparatus.

The Web page configuration information is an image included in the Web page, a character string included in the Web page, or a structured document representing the Web page. In this embodiment, the image generation system transmits the acquired Web page configuration information to the communication apparatus, and the communication apparatus writes, in a shared memory, data of the Web page configuration information received from the image generation system. In this embodiment, data sharing refers to making the Web page configuration information acquired on the cloud browser side available on the communication apparatus side.

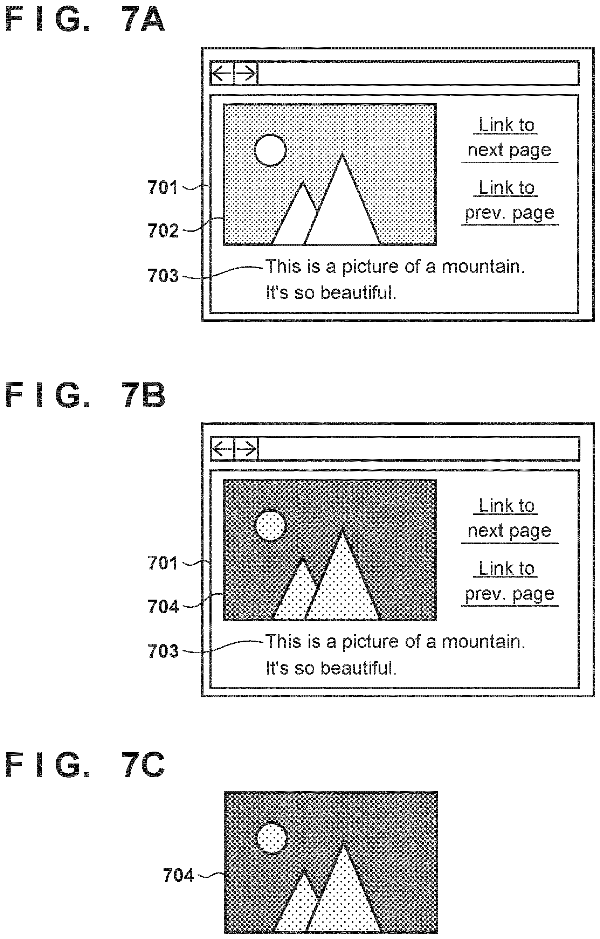

First, with reference to Figs. 7A to 7C, an outline of an operation of copying an image on a Web page will be described. Fig. 7A shows an example of a Web page. Reference numeral 701 denotes a Web page, reference numeral 702 denotes an image, and reference numeral 703 denotes a text. Fig. 7B shows a state in which the user has selected the image 702. The browser in this embodiment displays the image selected by the user with the color tone inverted. Reference numeral 704 denotes the selected image. Fig. 7C shows the image 704 to be copied. Data of the image 704 is stored in the shared memory of the communication apparatus.

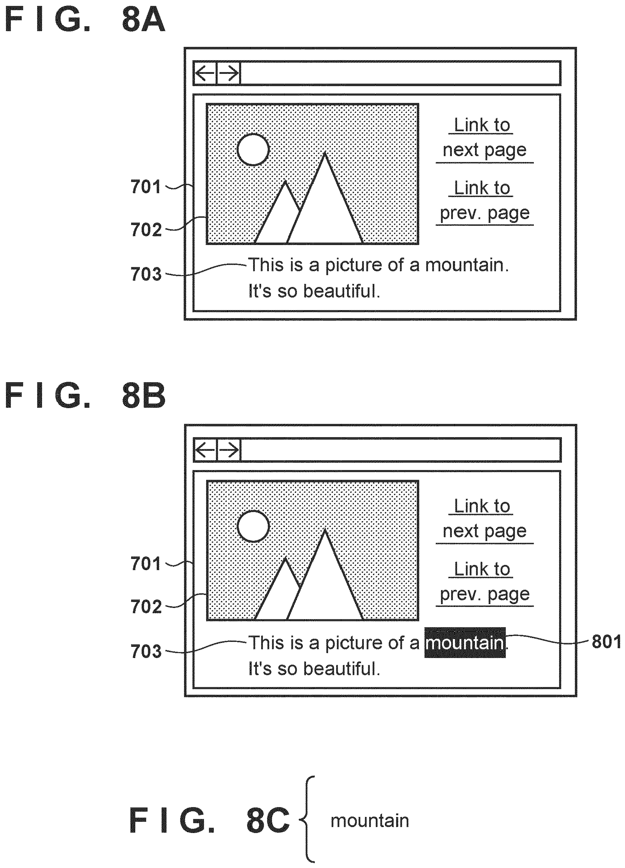

Next, with reference to Figs. 8A to 8C, an outline of an operation of copying a character string on a Web page will be described. Fig. 8A shows an example of a Web page, which is the same as in Fig. 7A. Fig. 8B shows a state in which the user has selected a character string 801. The browser in this embodiment displays the character string 801 selected by the user with the color tone inverted. Fig. 8C shows the character string to be copied. Data of the character string 801 is stored in the shared memory of the communication apparatus.

### <Hardware Arrangement>

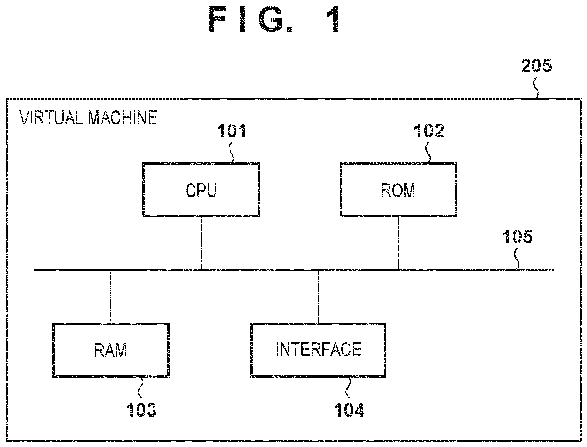

Fig. 1 is a view showing an example of the hardware arrangement of a virtual machine included in an image generation system according to this embodiment.

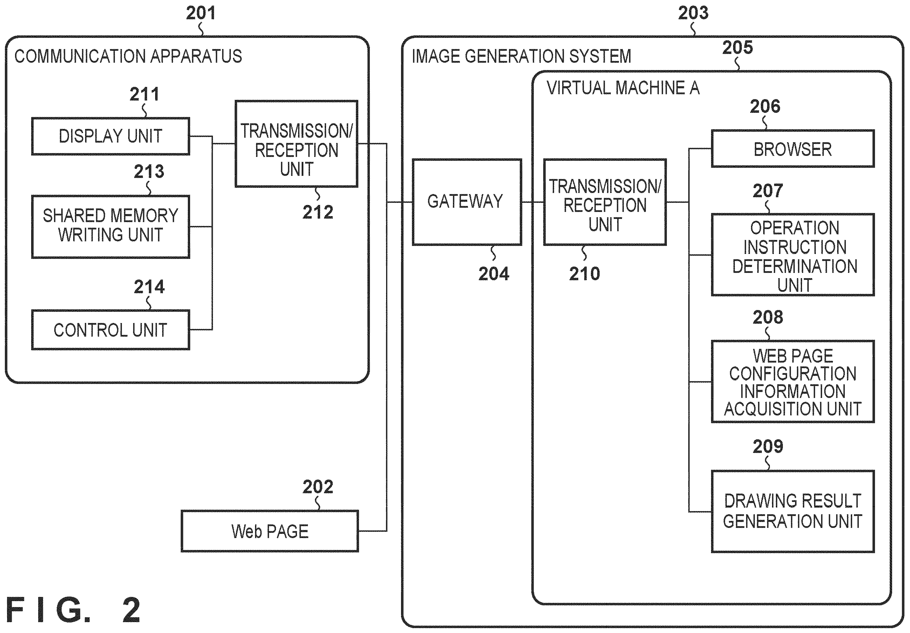

In Fig. 1, reference numeral 101 denotes one or more Central Processing Units (CPU) that control an entire virtual machine 205 shown in Fig. 2. Reference numeral 102 denotes a Read Only Memory (ROM) for storing programs and parameters that need not be changed. Reference numeral 103 denotes a Random Access Memory (RAM) for temporarily storing programs and data supplied from an external apparatus and the like. Reference numeral 104 denotes an interface for displaying the held data and supplied data.

Reference numeral 105 denotes a system bus that communicably connects the respective components of the CPU 101 to the interface 104 to each other. There may be an interface with a pointing device such as a mouse and an input device such as a keyboard used to input data by accepting a user operation. There may also be a hard disk or a memory card virtually provided in the virtual machine 205 while being fixed thereto. Alternatively, there may be an external storage apparatus including an optical disk such as a Flexible Disk (FD) or a Compact Disk (CD), a magnetic or optical card, an IC card, or a memory card, which is virtually attachable/detachable to/from the virtual machine 205. Further, there may be a network interface for connecting to a network line such as the Internet.

### <Arrangements of Image Generation System and Communication Apparatus>

Next, an example of the arrangement of a cloud browser according to this embodiment will be described. Fig. 2 is a view showing the arrangements of an image generation system and a communication apparatus according to the embodiment.

In Fig. 2, reference numeral 201 denotes a communication apparatus, and reference numeral 203 denotates an image generation system. In this embodiment, the communication apparatus 201 is, for example, a Multifunction Peripheral (MFP), and the image generation system 203 provides the function of a cloud browser.

The user is viewing the screen of the communication apparatus 201. The communication apparatus 201 transmits the URL of a Web page 202 which the user wants to view to the image generation system 203 via a transmission/reception unit 212.

Then, the image generation system 203 accesses the Web page 202 using the received URL, and a drawing result generation unit 209 generates the drawing result (rendering result) of the Web page 202. Thereafter, if a request to acquire the drawing result is received from the communication apparatus 201, the image generation system 203 transmits the drawing result generated by the drawing result generation unit 209 to the communication apparatus 201 via a transmission/reception unit 210. The communication apparatus 201 receives the drawing result via the transmission/reception unit 212, and passes the received drawing result to a control unit 214. The control unit 214 uses a display unit 211 to present the drawing result to the user.

Here, the image generation system 203 includes a gateway 204 and the virtual machine 205. A browser 206 operates on the virtual machine 205. The browser 206 is a so-called browser engine, and analyses HTML, JavaScript^{®}, CSS, and the like, and executes processing associated with a user operation or a communication event. Communication between the communication apparatus 201 and the virtual machine 205 and communication between the Web page 202 and the virtual machine 205 are performed via the gateway 204.

The virtual machine 205 operates the browser 206 based on a user operation instruction received from the communication apparatus 201. The operation instruction can include pressing a screen, calling a submenu, advancing, returning, enlarging the screen, and the like.

An operation instruction determination unit 207 determines the type of the operation instruction. In a case of extracting data of the Web page for a function of storing, in a memory, the character string selected in the submenu or the like, a Web page configuration information acquisition unit 208 acquires data of the character string or image on the Web page. The acquired Web page configuration information is transmitted to the communication apparatus 201 via the transmission/reception unit 210, and stored in the shared memory of the communication apparatus 201 by a shared memory writing unit 213 of the communication apparatus 201.

### <Process of Image Generation System>

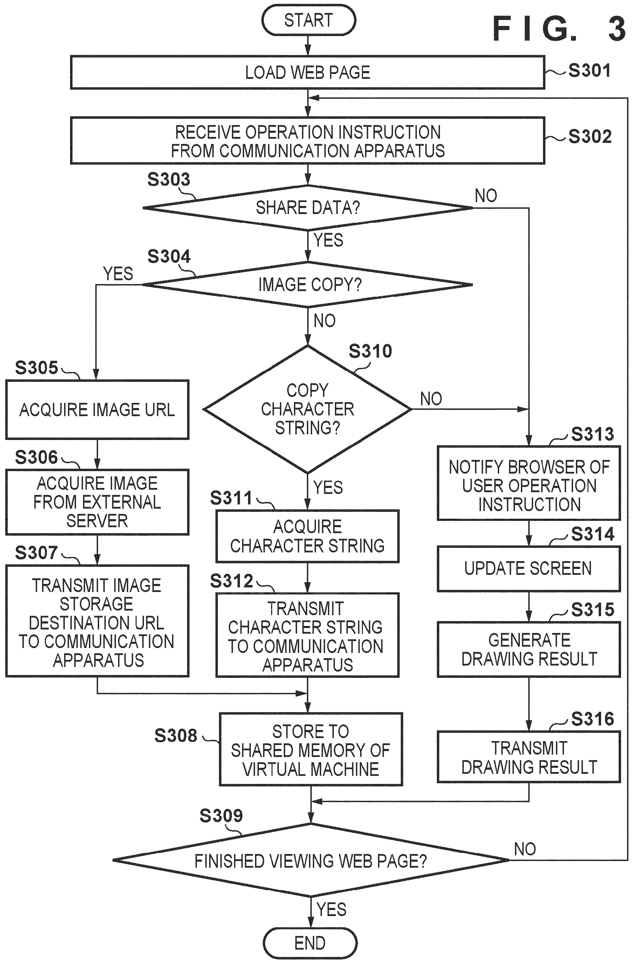

Subsequently, the procedure of a process executed by the image generation system (virtual machine) according to this embodiment will be described with reference to the flowchart of Fig 3.

### (Step S301)

In step S301, the browser 206 loads the URL of the Web page received from the communication apparatus 201.

### (Step S302)

In step S302, the operation instruction determination unit 207 receives a user operation instruction transmitted from the communication apparatus 201. The user operation instruction includes, for example, information indicating the attribute of a "tap" operation of touching the screen of the communication apparatus 201 with a finger, a "key input" operation of pressing the keyboard equipped on the communication apparatus 201, or the like. The user operation instruction can also include information attached for each attribute of the operation, such as the x and y coordinates indicating the place touched by the user on the screen of the communication apparatus 201, the value of the key pressed by the user, or the like. The information of the URL of the Web page and the user operation instruction reach the browser 206 through the gateway 204 and the transmission/reception unit 210.

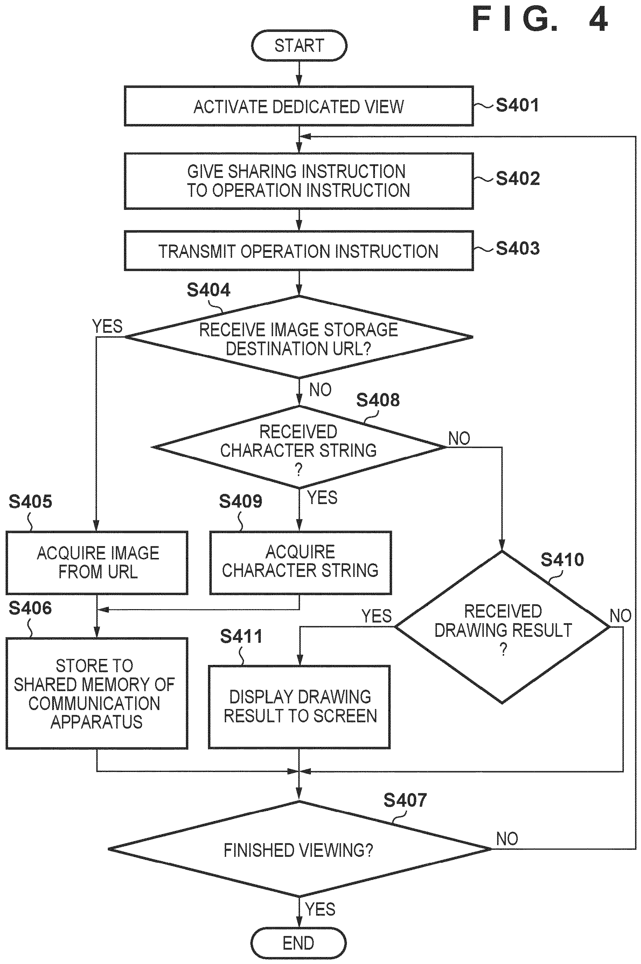

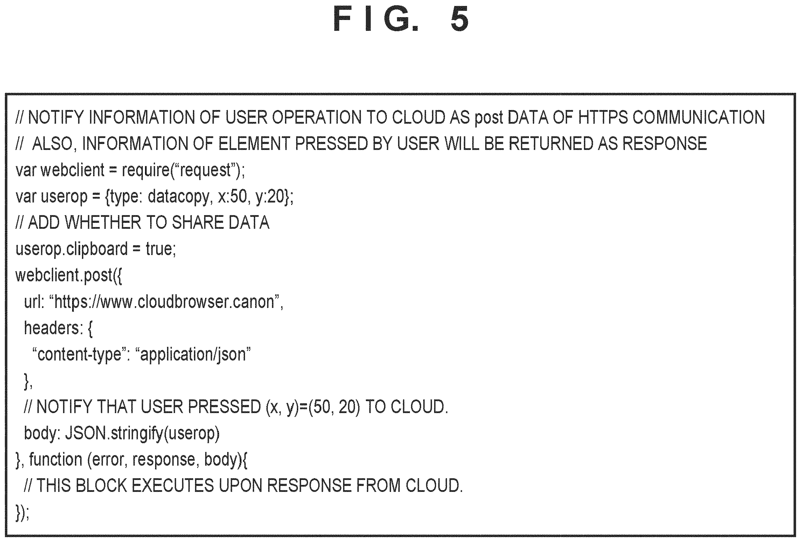

Here, with reference to Fig. 5, a method for the communication apparatus 201 to give a data sharing instruction to the user operation instruction, and a method of transmitting the user operation instruction from the communication apparatus 201 to the image generation system 203 functioning as the cloud browser will be described. These methods are performed by processing operations in steps S402 and S403, respectively, of Fig. 4 to be described later, and the user operation instruction is received in step S302 of Fig. 3.

Fig. 5 is a view showing an example of the JavaScript program for storing the user operation information in BODY of HTTP communication. webclient in Fig. 5 is a structure for transmitting an HTTP communication request to a communication destination. userop is a structure for storing the user operation instruction, and the value thereof is {type:datacopy, x:50, y:20}. type:datacopy indicates processing of copying, into the shared memory of the communication apparatus 201, the Web page configuration information at the position of the user operation. Another possible value for type is, for example, click. click indicates that the user operation is a click. x:50 indicates that the x coordinate where the user wants to operate is 50. y:20 indicates that the y coordinate where the user wants to operate is 20.

userop.clipboard is a flag indicating whether to make the Web page configuration information acquired on the cloud browser side available on the communication apparatus side. In Fig. 5, true is stored in userop.clipboard, and this means that the Web page configuration information acquired on the cloud browser side is made available on the communication apparatus side.

Transmission processing can be performed by webclient.post(). The request destination can be designated by an url member. In the example shown in Fig. 5, the value is "https://www.cloudbrowser.canon". The body of the request can be designated by a body member, and the value is userop.

### (Step S303)

In step S303, the operation instruction determination unit 207 determines, based on the information included in the user operation instruction, whether to perform data sharing between the communication apparatus 201 and the image generation system 203. In step S303, the operation instruction determination unit 207 refers to userop.clipboard from userop received in step S302. If the value is true, it is determined that data sharing is performed. If it is determined in step S303 that data sharing is performed, the process advances to step S304. On the other hand, if it is determined that data sharing is not performed, the process advances to step S313.

### (Step S304)

In step S304, the operation instruction determination unit 207 determines whether the user operation instruction is an instruction to copy, into the shared memory of the image generation system 203, an image which is the configuration information of the Web page. If the user operation instruction is an instruction to copy an image, the process advances to step S305. On the other hand, if the user operation instruction is not an instruction to copy an image, the process advances to step S310.

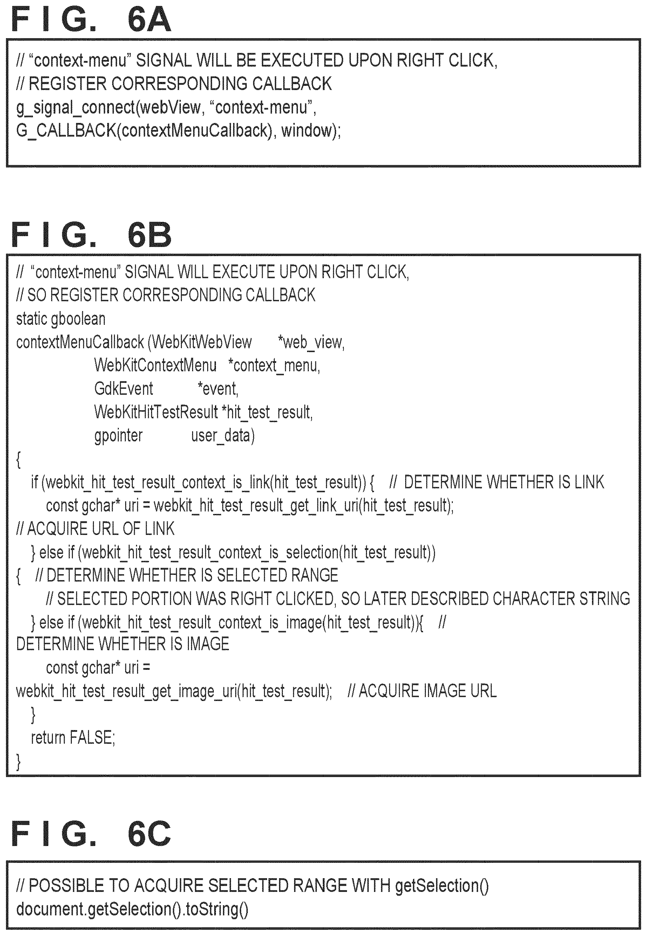

Here, with reference to Figs. 6A and 6B, details of processing for copying an image will be described. In Fig. 6A, consider a case of copying an image into the shared memory via a submenu which is displayed by pressing the right click of a mouse while the Web page is displayed by the browser.

Fig. 6A shows the implementation of the browser that detects a call of the submenu. The submenu is displayed by right-clicking the mouse while the Web page is displayed by the browser. In the implementation shown in Fig. 6A, a contextMenuCallback function fires when the mouse is right-clicked.

Fig. 6B shows the implementation of the contextMenuCallback function. In Fig. 6B, a webkit_hit_test_result_context_is_image function is a function for determining whether the element of the Web page operated by the user is an image. If this function returns true, it means that the operated element is an image.

More specifically, in step S304, the operation instruction determination unit 207 determines whether the value of userop.type of userop received in step S302 is datacopy. Further, the operation instruction determination unit 207 determines whether the webkit_hit_test_result_context_is_image function returns true. If true for both of the two determinations, it is determined that the instruction is an instruction to copy an image.

### (Step S305)

In step S305, the Web page configuration information acquisition unit 208 refers to webkit_hit_test_result_get_image_uri() shown in Fig. 6B, thereby acquiring information of the URL of the image.

### (Step S306)

In step S306, the Web page configuration information acquisition unit 208 accesses the URL acquired in step S305, thereby acquiring the image.

### (Step S307)

In step S307, the Web page configuration information acquisition unit 208 arranges the acquired image in the image generation system 203, and transmits, to the communication apparatus 201, the image storage destination URL indicating the place where the image is arranged.

Note that the image is handled in this embodiment, but the data to be stored in the image storage destination URL may be binary data other than the image such as a moving image or an execution program.

### (Step S308)

In step S308, the Web page configuration information acquisition unit 208 stores, in the shared memory of the virtual machine 205, the image acquired in step S306 or the character string acquired in step S311. With this, secondary use within the image generation system 203 becomes available, so that the copied Web page configuration information can be input to the inputtable element of the Web page.

### (Step S309)

In step S309, the operation instruction determination unit 207 determines whether the user has finished viewing the Web page. If the user has finished viewing the Web page, the process ends. On the other hand, if the user continues to view the Web page, the process returns to step S302.

### (Step S310)

In step S310, the operation instruction determination unit 207 determines whether the user operation instruction is an instruction to copy, into the shared memory of the image generation system 203, a character string which is the configuration information of the Web page. If the user operation instruction is an instruction to copy a character string, the process advances to step S311. On the other hand, if the user operation instruction is not an instruction to copy a character string, the process advances to step S313.

Here, with reference to Figs. 6A and 6B, details of processing for copying a character string will be described. Fig. 6A is as described above. In Fig. 6B, a webkit_hit_test_result_context_is_selection function is a function for determining whether the element of the Web page operated by the user is a character string. If this function returns true, it means that the operated element is a character string.

More specifically, in step S310, the operation instruction determination unit 207 determines whether the value of userop.type of userop received in step S302 is datacopy. Further, the operation instruction determination unit 207 determines whether the webkit_hit_test_result_context_is_selection function returns true. If true for both of the two determinations, it is determined that the instruction is an instruction to copy a character string.

### (Step S311)

In step S311, the Web page configuration information acquisition unit 208 uses document.getSelection().toString() shown in Fig. 6C to acquire the character string selected by the user. Fig. 6C shows the implementation for acquiring the character string.

### (Step S312)

In step S312, the Web page configuration information acquisition unit 208 transmits the character string acquired in step S311 to the communication apparatus 201. Then, the process advances to step S308.

### (Step S313)

In step S313, the operation instruction determination unit 207 notifies the browser 206 of the user operation instruction.

### (Step S314)

In step S314, the browser 206 updates the screen based on the notified user operation instruction.

### (Step S315)

In step S315, the drawing result generation unit 209 generates a drawing result (for example, an image obtained by converting the updated screen into an image).

### (Step S316)

In step S316, the browser 206 transmits the drawing result to the communication apparatus 201 via the transmission/reception unit 210. Then, the process advances to step S309. The process illustrated in Fig. 3 has been described above.

### <Process of Communication Apparatus>

Next, the procedure of a process executed by the communication apparatus according to this embodiment will be described with reference to the flowchart of Fig. 4.

In step S401, the control unit 214 activates a dedicated view, and accepts a user operation instruction. The user operation instruction can include, for example, an instruction to copy an image or character string existing at coordinates on a Web page, an instruction to scroll the Web page, an instruction to enlarge or reduce the Web page, or the like.

In step S402, the control unit 214 gives a data sharing instruction to the user operation instruction by using the method described with reference to Fig. 5. In step S403, the control unit 214 transmits the operation instruction to the image generation system 203 via the transmission/reception unit 212.

In step S404, the control unit 214 determines whether information of the image storage destination URL is received from the image generation system 203 via the transmission/reception unit 212. If the image storage destination URL is received, the process advances to step S405. On the other hand, if no image storage destination URL is received, the process advances to step S408.

In step S405, the control unit 214 accesses the received image storage destination URL, thereby acquiring the image. In step S406, the shared memory writing unit 213 stores, in the shared memory of the communication apparatus 201, the image acquired in step S405 or the character string acquired in step S409 to be described later. In step S407, the control unit 214 determines whether the user has finished viewing the Web page. If the user has finished viewing the Web page, the process ends. On the other hand, if the user continues to view the Web page, the process returns to step S402.

In step S408, the control unit 214 determines whether a character string is received via the transmission/reception unit 212. If a character string is received, the process advances to step S409. On the other hand, if no character string is received, the process advances to step S410.

In step S409, the control unit 214 acquires information of the received character string. In step S410, the control unit 214 determines whether a drawing result is received. If a drawing result is received, the process advances to step S411. On the other hand, if no drawing result is received, the process advances to step S407. In step S411, the control unit 214 displays the drawing result on the screen of the display unit 211. The process illustrated in Fig. 4 has been described above.

According to this embodiment, a communication apparatus can use data on a Web page copied by an apparatus (image generation system) functioning as a cloud browser.

### [Modifications]

The example has been described in the embodiment in which the communication apparatus gives the data sharing instruction to the operation instruction for each user operation. However, the data sharing instruction may be transmitted/received in advance between the communication apparatus and the image generation system, and data sharing may be accordingly performed thereafter.

The example has also been described in the embodiment in which the copy instruction is executed in a state in which a part or whole of the Web page is selected. On the other hand, if the copy instruction is executed in a state in which a part or whole of the Web page is not selected, the Web page configuration information to be copied may be the structured document representing the Web page. In this case, the structured document may be transmitted to the communication apparatus 201. Alternatively, if the structured document is stored in the image generation system 203, the URL of the storage destination may be transmitted.

According to the present disclosure, a communication apparatus can use data on a Web page copied by an apparatus functioning as a cloud browser.

### [Other Embodiments]

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

An image generation system (203) capable of communicating with a communication apparatus (101), the system includes reception means that receives an operation instruction for a Web page from the communication apparatus, acquisition means that, if the operation instruction is a copy instruction, acquires Web page configuration information which exists at coordinates on the Web page and for which the copy instruction has been accepted, and transmission means that transmits, to the communication apparatus, one of the Web page configuration information and information based on the Web page configuration information.

## Claims

1. An image generation system (203) capable of communicating with a communication apparatus (201), the system comprising:
reception means for receiving an operation instruction for a Web page from the communication apparatus;
acquisition means for, if the operation instruction is a copy instruction, acquiring Web page configuration information which exists at coordinates on the Web page and for which the copy instruction has been accepted, and
transmission means for transmitting, to the communication apparatus, one of the Web page configuration information and information based on the Web page configuration information.

2. The system according to claim 1, further comprising
storage means for storing the Web page configuration information acquired by the acquisition means,
wherein the information based on the Web page configuration information is information of a URL of a storage destination where the Web page configuration information is stored.

3. The system according to claim 2, wherein
if the Web page configuration information is an image included in the Web page, the transmission means transmits, to the communication apparatus, the information of the URL of the storage destination where the image is stored.

4. The system according to any one of claims 1 to 3, wherein
if the Web page configuration information is a character string included in the Web page, the transmission means transmits the character string to the communication apparatus.

5. The system according to any one of claims 1 to 4, wherein
if the Web page configuration information is a structured document representing the Web page, the transmission means transmits the structured document to the communication apparatus.

6. The system according to any one of claims 1 to 5, wherein
the copy instruction is executed in a state in which a part or whole of the Web page is selected.

7. The system according to any one of claims 1 to 6, wherein
if the copy instruction is executed in a state in which a part or whole of the Web page is not selected, the Web page configuration information to be copied is a structured document representing the Web page.

8. The system according to any one of claims 1 to 7, further comprising
determination means for determining, based on the operation instruction, whether to perform data sharing between the communication apparatus and the image generation system,
wherein, if it is determined to perform the data sharing, the acquisition means acquires the Web page configuration information.

9. A communication apparatus (201) capable of communicating with an image generation system, the apparatus comprising:
transmission means for transmitting an operation instruction for a Web page to the image generation system;
reception means for, if the operation instruction is a copy instruction, receiving one of Web page configuration information, acquired in the image generation system, which exists at coordinates on the Web page and for which the copy instruction has been accepted, and information based on the Web page configuration information from the image generation system; and
storage means for storing one of the Web page configuration information and the information based on the Web page configuration information received from the image generation system.

10. A control method of an image generation system (203) capable of communicating with a communication apparatus (201), the method comprising:
receiving an operation instruction for a Web page from the communication apparatus;
acquiring, if the operation instruction is a copy instruction, Web page configuration information which exists at coordinates on the Web page and for which the copy instruction has been accepted, and
transmitting, to the communication apparatus, one of the Web page configuration information and information based on the Web page configuration information.

11. A control method of a communication apparatus (201) capable of communicating with an image generation system, the method comprising:
transmitting an operation instruction for a Web page to the image generation system;
receiving, if the operation instruction is a copy instruction, one of Web page configuration information, acquired in the image generation system, which exists at coordinates on the Web page and for which the copy instruction has been accepted, and information based on the Web page configuration information from the image generation system; and
storing one of the Web page configuration information and the information based on the Web page configuration information received from the image generation system.

12. A non-transitory computer-readable storage medium storing a program for causing a computer to execute a control method of an image generation system (203) capable of communicating with a communication apparatus (201), the method comprising:
receiving an operation instruction for a Web page from the communication apparatus;
acquiring, if the operation instruction is a copy instruction, Web page configuration information which exists at coordinates on the Web page and for which the copy instruction has been accepted, and
transmitting, to the communication apparatus, one of the Web page configuration information and information based on the Web page configuration information.

13. A non-transitory computer-readable storage medium storing a program for causing a computer to execute a control method of a communication apparatus (201) capable of communicating with an image generation system (203), the method comprising:
transmitting an operation instruction for a Web page to the image generation system;
receiving, if the operation instruction is a copy instruction, one of Web page configuration information, acquired in the image generation system, which exists at coordinates on the Web page and for which the copy instruction has been accepted, and information based on the Web page configuration information from the image generation system; and
storing one of the Web page configuration information and the information based on the Web page configuration information received from the image generation system.
